# EUROPEAN PATENT APPLICATION

(11) **EP 1 282 065 A1**
(43) Date of publication of application: **05.02.2003**
(21) Application number: 02255311.9
(22) Date of filing: 30.07.2002
(51) Int. Cl.: G06K 1/12

(54) **Information managing method and system and processing apparatus**

(30) Priority: 31.07.2001 JP 2001232760
(71) Applicant: CANON KABUSHIKI KAISHA, Tokyo (JP)
(72) Inventor: Nakamura, Takashi, c/o Canon K.K., Ohta-ku, Tokyo (JP)
(74) Representative: Beresford, Keith Denis Lewis

(57) **Abstract**

In a semiconductor manufacturing system, a decryption key is effectively protected, thereby protecting manufacturing data. A host computer (1) sends encrypted manufacturing data to an exposure apparatus (2) and sends to a mask stocker (10) mask identification information and decryption key data to be used to decrypt the encrypted manufacturing data. The mask stocker (10) specifies a mask (13) on the basis of the mask identification information and records decryption key data (K1) on the mask. The mask (13) is transferred to the exposure apparatus (2) by a transfer cart (30). The exposure apparatus (2) receives the mask (13) and reads the decryption key data (K1). The exposure apparatus (2) decrypts the encrypted manufacturing data in accordance with the decryption key data and executes exposure on the basis of the manufacturing data.

## Description

### FIELD OF THE INVENTION

The present invention relates to an information managing method, information managing system, and processing apparatus and, more particularly, to an information managing method and information managing system for managing information, and a processing apparatus having a function for information management.

### BACKGROUND OF THE INVENTION

In manufacturing a semiconductor device and, especially, in an exposure process of transferring a mask pattern onto a wafer, various kinds of manufacturing data including layout information of an integrated circuit chip are required. Know-how in manufacturing semiconductor devices and the like are reflected on these manufacturing data. Hence, these data are handled as confidential information in both semiconductor makers and manufacturing apparatus makers. Such manufacturing data are normally held on a semiconductor manufacturing apparatus or a host computer connected to a semiconductor manufacturing apparatus through a network.

Recently, semiconductor manufacturing apparatuses are connected to a network and operated from a remote site. Since many manufacturing apparatuses cope with a network environment, the need for connecting manufacturing apparatuses of a plurality of apparatus makers to a network is increasing. Semiconductor manufacturing apparatuses connected to a network can be subjected not only to remote operation but also to remote monitoring or remote maintenance through the network. However, when all manufacturing apparatuses are connected to a single network, apparatuses of different apparatus makers can access each other. Additionally, an engineer of a specific apparatus maker, who accesses an apparatus of that specific apparatus maker for the purpose of remote monitoring, can also access an apparatus of another maker.

Conventionally, data protection using cryptography is popular in fields except for manufacturing systems. In an environment where a number of manufacturing apparatuses are arranged and are accessible from the outside through a network, however, it is difficult to protect decryption keys. Hence, protection by cryptology has not been done.

Conventionally, it is difficult to protect the secret of manufacturing data in a manufacturing system in which a plurality of manufacturing apparatuses are connected to a network, as described above. In some cases, a method of disabling mutual access by physically separating a network for each apparatus maker is employed. In this case, however, network management is cumbersome. In addition, in the method of separating a network, manufacturing data cannot be protected from a malicious third party who enters a manufacturing apparatus on each network from the outside. For these reasons, an effective technique for protecting the secret of manufacturing data has been demanded.

### SUMMARY OF THE INVENTION

The present invention has been made in consideration of the above situation, and has as its object to effectively protect a decryption key in a system such as a manufacturing system to protect information such as manufacturing data.

According to the first aspect of the present invention, there is provided an information managing method of managing information, comprising the recording step of causing a first apparatus to record a decryption key to be used to decrypt encrypted information on a recording medium attached to a transportable article, and the decryption step of causing a second apparatus to receive the article and decrypt the encrypted information on the basis of the decryption key recorded on the recording medium attached to the article.

According to a preferred embodiment of the present invention, the information managing method preferably further comprises the erase step of causing the second apparatus to erase the decryption key recorded on the recording medium.

According to another preferred embodiment of the present invention, the information managing method preferably further comprises the first transmission step of causing an information managing apparatus to transmit the encrypted information to the second apparatus, and the second transmission step of causing the information managing apparatus to transmit to the first apparatus the decryption key to be used to decrypt the information transmitted in the first transmission step.

According to still another preferred embodiment of the present invention, the second apparatus is, e.g., a manufacturing apparatus used to manufacture a product (e.g., a semiconductor manufacturing apparatus such as an exposure apparatus).

According to still another preferred embodiment of the present invention, the first apparatus is a mask stocker which accommodates a mask and/or the article includes a mask or a mask carrier which accommodates the mask. Alternatively, the article may be a wafer carrier which accommodates a wafer.

According to still another preferred embodiment of the present invention, the recording medium preferably includes a memory or a printable medium.

According to still another preferred embodiment of the present invention, preferably, in the recording step, identification information of the article is recorded on the recording medium attached to the article together with the decryption key, and in the decryption step, when article identification information of the article, which accompanies the encrypted information, matches the article identification information recorded on the recording medium attached to the article, the encrypted information is decrypted on the basis of the decryption key.

According to still another preferred embodiment of the present invention, preferably, in the recording step, key identification information corresponding to the decryption key is recorded on the recording medium attached to the article together with the decryption key, and in the decryption step, when key identification information which accompanies the encrypted information matches the key identification information recorded on the recording medium attached to the article, the encrypted information is decrypted on the basis of the decryption key.

According to still another preferred embodiment of the present invention, the method preferably further comprises the transfer step of transferring the article from the first apparatus to the second apparatus.

According to the second aspect of the present invention, there is provided an information managing system for managing information, comprising a first apparatus having a recording section which records a decryption key to be used to decrypt encrypted information on a recording medium attached to a transportable article, and a second apparatus having a decryption section which decrypts the encrypted information on the basis of the decryption key recorded on the recording medium attached to the article.

According to a preferred embodiment of the present invention, the second apparatus preferably further comprises an erase section which erases the decryption key recorded on the recording medium.

According to another preferred embodiment of the present invention, preferably, the information managing system further comprises an information managing apparatus, and the information managing apparatus comprises a first transmitting section which transmits the encrypted information to the second apparatus, and a second transmitting section which transmits to the first apparatus the decryption key to be used to decrypt the information transmitted by the first transmitting section.

According to still another preferred embodiment of the present invention, the second apparatus is, e.g., a manufacturing apparatus used to manufacture a product (e.g., a semiconductor manufacturing apparatus such as an exposure apparatus).

According to still another preferred embodiment of the present invention, the first apparatus is a mask stocker which accommodates a mask and/or the article includes a mask or a mask carrier which accommodates the mask. Alternatively, the article may be a wafer carrier which accommodates a wafer.

According to still another preferred embodiment of the present invention, the recording medium preferably includes a memory or a printable medium.

According to still another preferred embodiment of the present invention, preferably, the recording section records identification information of the article on the recording medium attached to the article together with the decryption key, and when article identification information of the article, which accompanies the encrypted information, matches the article identification information recorded on the recording medium attached to the article, the description section decrypts the encrypted information on the basis of the decryption key.

According to still another preferred embodiment of the present invention, preferably, the recording section records key identification information corresponding to the decryption key on the recording medium attached to the article together with the decryption key, and when key identification information which accompanies the encrypted information matches the key identification information recorded on the recording medium attached to the article, the decryption section decrypts the encrypted information on the basis of the decryption key.

According to still another preferred embodiment of the present invention, the system preferably further comprises a transfer apparatus which transfers the article from the first apparatus to the second apparatus.

According to the third aspect of the present invention, there is provided a processing apparatus for processing an article, comprising a specifying section which specifies one article from a plurality of transportable articles in accordance with an instruction from an external device, and a recording section which records a decryption key to be used to decrypt encrypted information on a recording medium attached to the article specified by the specifying section.

According to the fourth aspect of the present invention, there is provided a processing apparatus for decrypting encrypted information and executing processing on the basis of the decrypted information, comprising a decryption section which decrypts the encrypted information to be used to control the processing on the basis of a decryption key recorded on a recording medium attached to an article required for the processing.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a view showing the arrangement of a semiconductor manufacturing system according to a preferred embodiment of the present invention;
Fig. 2 is a flow chart showing the operation of a host computer;
Fig. 3 is a flow chart showing the operation of a mask stocker; and
Fig. 4 is a flow chart showing the operation of an exposure apparatus.

### DETAILED DESCRIPTION OF THE PREFERRED EMBODIMENT

A preferred embodiment of the present invention will be described below with reference to the accompanying drawings.

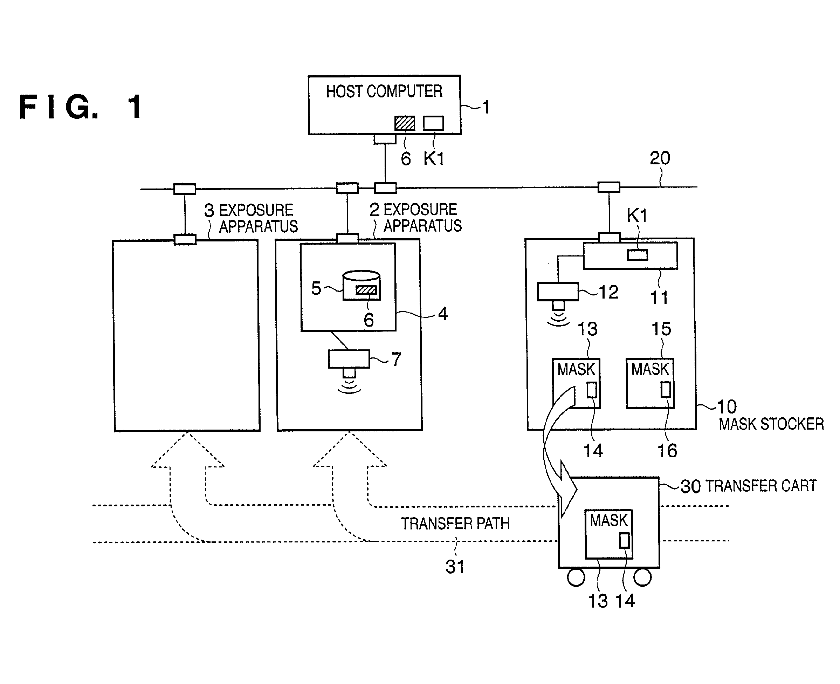

Fig. 1 is a view showing the arrangement of a semiconductor manufacturing system according to a preferred embodiment of the present invention. This semiconductor manufacturing system comprises a host computer 1 which controls the entire system to generate an encryption key and encrypt data, semiconductor exposure apparatuses (e.g., steppers or scanners) 2 and 3 as an example of a semiconductor manufacturing apparatus, a mask stocker 10 which stocks masks (e.g., reticles) necessary for current exposure operation, a communication network 20 which connects these units, and a transfer cart (transfer device) 30 which transfers a mask 13 or 15 along a transfer path 31 between the exposure apparatuses 2 and 3 and the mask stocker 10.

The masks 13 and 15 have, e.g., IC cards 14 and 16 which are read- or write-accessible in a noncontact state. Mask identification information (e.g., an identification number) is recorded on each IC card in advance. The masks are managed on the basis of the identification information.

The host computer 1 assigns key identification information (e.g., an identification number) to a pair of an encryption key (a key used for encryption) generated at the time of encrypting manufacturing data and a decryption key (a key necessary for decrypting data encrypted by a corresponding encryption key) generated in correspondence with the encryption key.

The exposure apparatus 2 is controlled by an exposure apparatus controller 4. The exposure apparatus controller 4 has a hard disk 5. A program for controlling the exposure apparatus 2 is stored in the hard disk 5. The exposure apparatus 2 also has, e.g., a noncontact IC card reader/writer 7. The IC card reader/writer 7 reads information recorded on an IC card attached onto a mask or writes information on the IC card.

Encrypted manufacturing data is typically transmitted from the host computer 1 to the exposure apparatus 2 or 3 or another manufacturing apparatus (not shown) through the communication network 20. In the example shown in Fig. 1, encrypted manufacturing data is transmitted to the exposure apparatus 2 through the communication network 20. For example, manufacturing data may be created or edited on the exposure apparatus 2 and encrypted using a public encryption key provided by the host computer 1.

The mask stocker 10 is controlled by a stocker controller 11. The stocker controller 11 receives, from the host computer 1, mask identification information for specifying a mask to be used in exposure processing, key identification information corresponding to an encryption key (and decryption key) used to encrypt manufacturing data adapted for the mask and an exposure apparatus which uses the mask, and decryption key data corresponding to the key identification information. The stocker controller 11 searches the mask stocker 10 for a mask specified by the mask identification information and writes, by, e.g., a noncontact IC card reader/writer 12, the key identification information and decryption key data on an IC card attached onto the mask. After that, the mask is placed on the transfer cart 30 and transferred to the corresponding exposure apparatus. For example, when the access right for the communication network 20 to the IC card reader/writer 12 or mask stocker controller 11 is limited to a predetermined person or completely inhibited, leakage of the decryption key data recorded on the IC card of the mask can be more effectively prevented.

The operation of the semiconductor manufacturing system according to this embodiment will be described below in detail with reference to Figs. 1 to 4 using, as an example, exposure processing executed using the mask 13 and exposure apparatus 2 shown in Fig. 1.

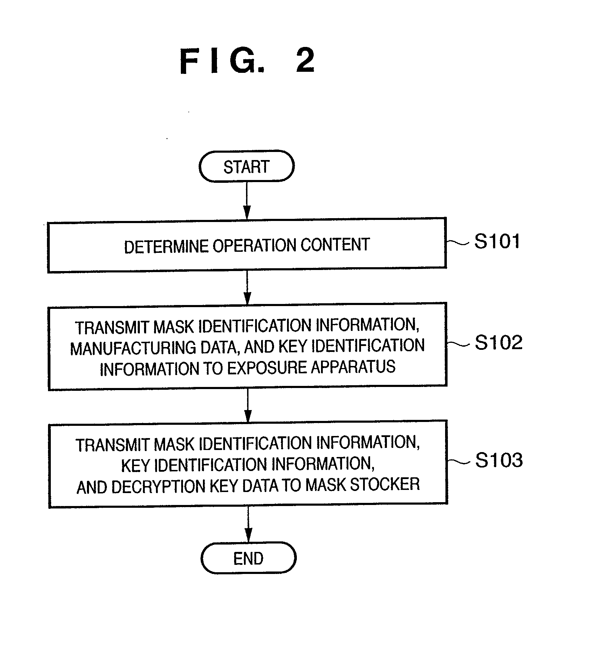

Fig. 2 is a flow chart showing the operation of the host computer 1. First, in step S101, the host computer 1 determines an operation content (here, processing of exposing a wafer by combining the exposure apparatus 2 and mask 13) on the basis of a production plan prepared in advance.

In step S102, the host computer 1 transmits, to the exposure apparatus 2, mask identification information as information for specifying the mask 13 to be used, encrypted manufacturing data 6 to be used to execute exposure processing by the exposure apparatus 2 using the mask 13, and key identification information corresponding to an encryption key (and decryption key) used to encrypt the manufacturing data.

In step S103, the host computer 1 transmits, to the mask stocker 10, a mask identification number for specifying the mask 13 to be used in the exposure apparatus 2, key identification information corresponding to the encryption key (and decryption key) used to encrypt the manufacturing data to be provided from the host computer 1 to the exposure apparatus 2, and data K1 of a decryption key (i.e., a decryption key paired with the encryption key corresponding to the key identification number) corresponding to the key identification information.

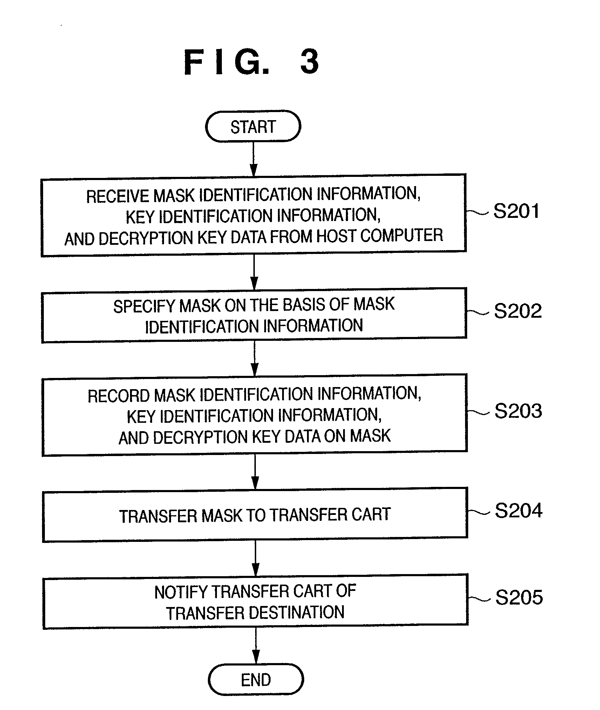

Fig. 3 is a flow chart showing the operation of the mask stocker 10. First, in step S201, the mask stocker controller 11 receives, from the host computer 1, the mask identification number for specifying the mask 13 to be used for exposure processing by the exposure apparatus 2, key identification information corresponding to the encryption key (and decryption key) used to encrypt the manufacturing data to be provided from the host computer 1 to the exposure apparatus 2, and the data K1 of the decryption key (i.e., the decryption key paired with the encryption key corresponding to the key identification number) corresponding to the key identification information. This step corresponds to step S103 in Fig. 2.

In step S202, the mask stocker controller 11 searches for the mask to be used for exposure processing from a number of masks stocked in the mask stocker 10 on the basis of the mask identification information received in step S201 (specifying the mask).

In step S203, the mask stocker controller 11 records the mask identification information, key identification information, and decryption key data K1 received in step S201 on the IC card 14 attached to the mask 13 searched for in step S202.

In step S204, the mask stocker controller 11 transfers the mask 13 to the transfer cart 30.

In step S205, the mask stocker controller 11 notifies the transfer cart 30 that the mask 13 should be transferred to the exposure apparatus 2. This notification may be sent from the host computer 1 to the transfer cart 30.

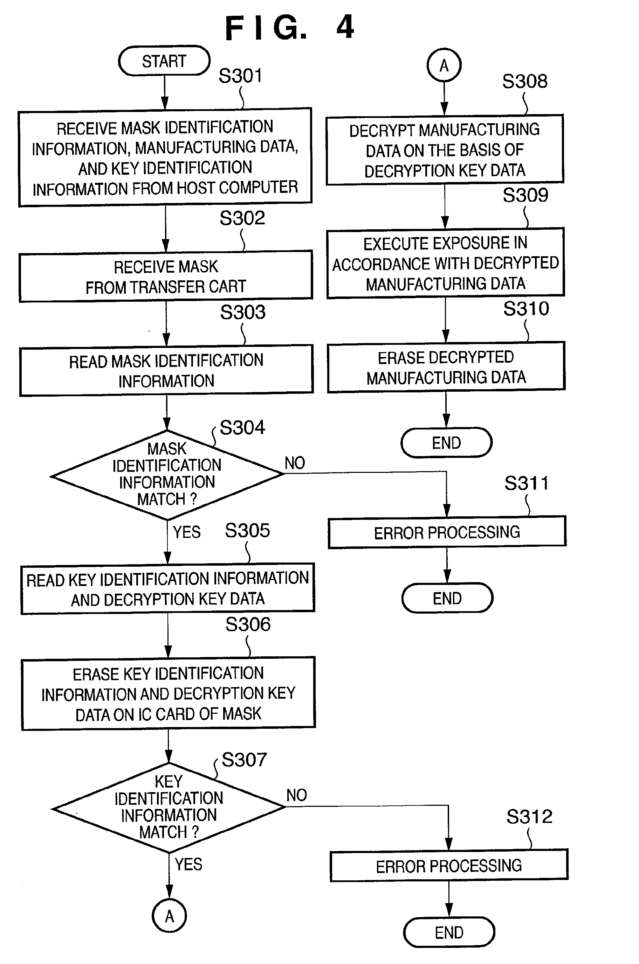

Fig. 4 is a flow chart showing the operation of the exposure apparatus 2. In step S301, the exposure apparatus controller 4 receives the mask identification information as information for specifying the mask 13 (the mask to be transferred by the transfer cart 30) to be used, encrypted manufacturing data 6 to be used for exposure processing by the exposure apparatus 2 using the mask 13, and key identification information corresponding to the encryption key (and decryption key) used to encrypt the manufacturing data. This step corresponds to step S102 in Fig. 2.

In step S302, the exposure apparatus controller 4 drives a mask receiving mechanism and makes it receive the mask 13 from the transfer cart 30 that has transferred the mask 13 through the transfer path 31.

In step S303, the exposure apparatus controller 4 reads the mask identification information recorded on the IC card 14 of the mask 13. In step S304, it is checked whether the read mask identification information matches the mask identification information received from the host computer 1 in step S301. If YES in step S304, the flow advances to step S305. If NO in step S304, the flow advances to step S311 to execute predetermined error processing.

In step S305, the exposure apparatus controller 4 reads the key identification information and decryption key data K1, which are recorded on the IC card 14 of the mask 13, using the reader/writer 7, and stores them in a primary memory (not shown). In step S306, the exposure apparatus controller 4 erases the key identification information and decryption key data K1 on the IC card 14 using the reader/writer 7. That is, immediately before exposure processing, the key identification information and decryption key data K1 are recorded on the IC card 14 of the mask 13 by the reader/writer 12 of the mask stocker 10. After that, the mask 13 is transferred to the exposure apparatus by the transfer cart 30. After the key identification information and decryption key data are read by the reader/writer 7, at least the decryption key data of the key identification information and decryption key data is erased from the IC card 14. In addition, since the key identification information and decryption key data read from the IC card 14 are stored in the primary memory of the exposure apparatus controller 4, it is difficult to access these pieces of information from the outside. Hence, the risk that a person who accesses the semiconductor manufacturing apparatus such as the exposure apparatus 2 through the communication network 20 may acquire the decryption key data can be minimized.

In step S307, the exposure apparatus controller 4 checks whether the key identification number (the key identification number corresponding to the encryption key used to encrypt the manufacturing data 6) received together with the manufacturing data 6 encrypted in step S301 matches the key identification number read from the IC card 14 of the mask 13 in step S305. If YES in step S307, the flow advances to step 5308. If NO in step S307, the flow advances to step S312 to execute error processing. That the two key identification numbers match means that the manufacturing data 6 can be decrypted on the basis of the decryption key data K1 recorded on the IC card 14 of the mask 13.

In step S308, the exposure apparatus controller 4 decrypts the encrypted manufacturing data 6 which is received from the host computer 1 in step S301, on the basis of the decryption key data K1 recorded on the IC card 14 of the mask 13, which is read in step S305. The decrypted manufacturing data is preferably stored in only the primary memory or a memory that is inaccessible from the outside.

In step S309, the exposure controller 4 transfers the pattern formed on the mask 13 to the wafer while controlling sections of the exposure apparatus 2 in accordance with the decrypted manufacturing data. This transfer is typically done for a plurality of wafers in accordance with the manufacturing data.

In step S310, after the series of exposure processes are completed, the exposure controller 4 erases the decrypted manufacturing data from the memory that has stored the manufacturing data. With this processing, even when an unwanted invasion from the outside to the exposure apparatus 2 has occurred, the decrypted manufacturing data can be prevented from being acquired by the invader. Instead of erasing the decrypted manufacturing data all at once, an unnecessary part of the data may be sequentially erased every time control parameter setting of the exposure apparatus 2 is ended. With this operation, the risk of leakage of the decrypted manufacturing data can be further reduced.

If access to the host computer 1 through the network 20 is permitted, confidential information such as unencrypted manufacturing data may leak from the host computer 1. For this reason, access to the host computer 1 must be completely or partially inhibited.

In the above embodiment, in place of the IC card 14, various kinds of memory media may be employed. Alternatively, a printable medium may be employed. The key identification information and decryption key data K1 may be printed on the medium as, e.g., bar codes.

Instead of attaching a recording medium such as an IC card or printable medium to a mask itself, a recording medium may be attached to a mask cassette for accommodating a mask to hold the key identification information and decryption key data K1.

Instead of attaching a recording medium such as an IC card or printable medium to a mask, a recording medium may be attached to a wafer carrier for accommodating wafers to be exposed to hold the key identification information and decryption key data K1.

As described above, according to the preferred embodiment of the present invention, decryption key data to be used to decrypt manufacturing data is provided to a semiconductor manufacturing apparatus through an article such as a mask (i.e., an article difficult to access) . For this reason, the risk that a well-intentioned or malicious person who accesses the network acquires the decryption key data can be minimized. Hence, even when the person acquires encrypted manufacturing data, there is little possibility of decrypting the manufacturing data.

According to the preferred embodiment of the present invention, encrypted manufacturing data is provided from the host computer to a semiconductor manufacturing apparatus such as an exposure apparatus. Decryption key data to be used to decrypt the manufacturing data is provided to the semiconductor manufacturing apparatus through another path, i.e., an article such as a mask (i.e., an article difficult to access) to be used by the semiconductor manufacturing apparatus. For this reason, the risk that a well-intentioned or malicious person who accesses the network acquires both the encrypted manufacturing data and the decryption key data to be used to decrypt the manufacturing data can be minimized.

According to the present invention, in a system such as a manufacturing system, a decryption key can be effectively protected. Hence, information such as manufacturing data can be protected.

As many apparently widely different embodiments of the present invention can be made without departing from the scope thereof, it is to be understood that the invention is not limited to the specific embodiments thereof except as defined in the claims.

## Claims

1. An information managing method of managing information, comprising:
a recording step of causing a first apparatus to record a decryption key to be used to decrypt encrypted information on a recording medium attached to a transportable article; and
a decryption step of causing a second apparatus to receive the article and decrypt the encrypted information on the basis of the decryption key recorded on the recording medium attached to the article.

2. The method according to claim 1, further comprising an erase step of causing the second apparatus to erase the decryption key recorded on the recording medium.

3. The method according to claim 1 or 2, further comprising
a first transmission step of causing an information managing apparatus to transmit the encrypted information to the second apparatus, and
a second transmission step of causing the information managing apparatus to transmit to the first apparatus the decryption key to be used to decrypt the information transmitted in the first transmission step.

4. The method according to any preceding claim wherein the second apparatus is a manufacturing apparatus used to manufacture a product.

5. The method according to claim 4 wherein the second apparatus is a semiconductor manufacturing apparatus used to manufacture a semiconductor device.

6. The method according to claim 5, wherein the semiconductor manufacturing apparatus includes an exposure apparatus.

7. The method according to claim 6, wherein the first apparatus is a mask stocker which accommodates a mask.

8. The method according to claim 6 or 7, wherein the article includes a mask or a mask carrier which accommodates the mask.

9. The method according to any one of claims 6 to 8 wherein the article includes a wafer carrier which accommodates a wafer.

10. The method according to any preceding claim wherein the recording medium includes a memory.

11. The method according to any preceding claim wherein the recording medium includes a printable medium.

12. The method according to any preceding claim wherein
in the recording step, identification information of the article is recorded on the recording medium attached to the article together with the decryption key, and
in the decryption step, when article identification information of the article, which accompanies the encrypted information, matches the article identification information recorded on the recording medium attached to the article, the encrypted information is decrypted on the basis of the decryption key.

13. The method according to any preceding claim wherein
in the recording step, key identification information corresponding to the decryption key is recorded on the recording medium attached to the article together with the decryption key, and
in the decryption step, when key identification information which accompanies the encrypted information matches the key identification information recorded on the recording medium attached to the article, the encrypted information is decrypted on the basis of the decryption key.

14. The method according to any preceding claim further comprising a transfer step of transferring the article from the first apparatus to the second apparatus.

15. An information managing system for managing information, comprising:
a first apparatus having a recording section which records a decryption key to be used to decrypt encrypted information on a recording medium attached to a transportable article; and
a second apparatus having a decryption section which decrypts the encrypted information on the basis of the decryption key recorded on the recording medium attached to the article.

16. The system according to claim 15, wherein said second apparatus further comprises an erase section which erases the decryption key recorded on the recording medium.

17. The system according to claim 15 or 16, further comprising an information managing apparatus,
said information managing apparatus comprising
a first transmitting section which transmits the encrypted information to said second apparatus, and
a second transmitting section which transmits to said first apparatus the decryption key to be used to decrypt the information transmitted by said first transmitting section.

18. The system according to any one of claims 15 to 17 wherein said second apparatus is a manufacturing apparatus used to manufacture a product.

19. The system according to claim 18 wherein said second apparatus is a semiconductor manufacturing apparatus used to manufacture a semiconductor device.

20. The system according to claim 19, wherein the semiconductor manufacturing apparatus includes an exposure apparatus.

21. The system according to claim 19 or 20, wherein said first apparatus is a mask stocker which accommodates a mask.

22. The system according to any one of claims 15 to 21 wherein the article includes a mask or a mask carrier which accommodates the mask.

23. The system according to any one of claims 15 to 22 wherein the article includes a wafer carrier which accommodates a wafer.

24. The system according to any one of claims 15 to 23 wherein the recording medium includes a memory.

25. The system according to any one of claims 15 to 24 wherein the recording medium includes a printable medium.

26. The system according to any one of claims 15 to 25 wherein
said recording section records identification information of the article on the recording medium attached to the article together with the decryption key, and
when article identification information of the article, which accompanies the encrypted information, matches the article identification information recorded on the recording medium attached to the article, said description section decrypts the encrypted information on the basis of the decryption key.

27. The system according to any one of claims 15 to 26 wherein
said recording section records key identification information corresponding to the decryption key on the recording medium attached to the article together with the decryption key, and
when key identification information which accompanies the encrypted information matches the key identification information recorded on the recording medium attached to the article, said decryption section decrypts the encrypted information on the basis of the decryption key.

28. The system according to any one of claims 15 to 27 further comprising a transfer apparatus which transfers the article from said first apparatus to said second apparatus.

29. A processing apparatus for processing an article, comprising.
a specifying section which specifies one article from a plurality of transportable articles in accordance with an instruction from an external device; and
a recording section which records a decryption key to be used to decrypt encrypted information on a recording medium attached to the article specified by said specifying section.

30. A processing apparatus for decrypting encrypted information and executing processing on the basis of the decrypted information, comprising:
a decryption section which decrypts the encrypted information to be used to control the processing on the basis of a decryption key recorded on a recording medium attached to an article required for the processing.

31. A method for manufacturing a semiconductor device using encrypted information management as defined in any one of claims 1 to 14, the method comprising:
(a) providing a substrate having a resist coating;
(b) providing a mask corresponding to a circuit pattern design;
(c) introducing and positioning said mask within a processing chamber;
(d) introducing and positioning said resist-coated substrate in said processing chamber and exposing said resist-coated substrate to radiation through said mask; and
(e) developing the substrate exposed in step (d).

32. A method of manufacturing an integrated circuit comprising the steps (a) to (e) set forth in claim 31 followed by the steps of:
(f) removing the unwanted resist-coating from said substrate; and
(g) completing manufacture of the integrated circuit device.

33. A method as claimed in claim 32, wherein step (g) includes steps of dicing the substrate, bonding and packaging.
